# EUROPÄISCHE PATENTSCHRIFT

(11) **EP 0 628 736 B1**
(45) Veröffentlichungstag und Bekanntmachung des Hinweises auf die Patenterteilung: **19.11.1997**
(21) Anmeldenummer: 94810337.9
(22) Anmeldetag: 07.06.1994
(51) Int. Cl.: F16B 12/40, F16B 7/04, A47B 47/05

(54) **Möbel mit einem Rohrgestell**
Furniture with tube framework
Meuble avec un cadre constitué de tuyaux

(30) Priorität: 08.06.1993 CH 1721/93
(43) Veröffentlichungstag der Anmeldung: 14.12.1994
(73) Patentinhaber: Häubi, Heinz, CH-3271 Radelfingen (CH)
(72) Erfinder: Häubi, Heinz, CH-3271 Radelfingen (CH)
(74) Vertreter: AMMANN PATENTANWAELTE AG BERN

(56) Entgegenhaltungen:
- WO-A-91/13262
- CH-A- 523 462
- DE-A- 1 654 759
- FR-A- 1 434 263
- FR-A- 2 200 420
- GB-A- 1 549 138

## Beschreibung

Die vorliegende Erfindung betrifft ein Möbel gemäss dem Oberbegriff des Anspruchs 1. Bekannte Möbel dieser Art weisen in den Knotenpunkten bzw. Verbindungsstellen der Rohre aufwendige Kupplungsmittel auf, wobei die eine Hälfte von Keilelementensätzen mit entsprechend geformten Anschlussflächen an den anschliessenden Rohren anliegen (WO 91/13 262). Die Montage ist damit erschwert und es entstehen an allen Verbindungsstellen zwei Fugen, was vom hygienischen und ästhetischen Standpunkt her nachteilig ist.

Ziel vorliegender Erfindung ist es, ein Möbel mit Rohrgestell zu schaffen, das besonders einfach zu montieren ist und trotzdem saubere, ästhetische Verbindungsstellen der Rohre gewährleistet. Dieses Ziel wird gemäss Anspruch 1 erreicht. Da die Rohre direkt aneinanderstossen, sind von aussen nur glatte, satt aneinanderliegende Flächen vorhanden. Alle Rohre bzw. Rohrenden können individuell, ohne Eingriff durch ein anderes, gegenüberliegendes Rohr verbunden werden. Da die Enden bzw. Stirnseiten aller an die Mantelfläche eines quer dazu stehenden Rohres anliegenden Rohre gleichartige Anfräsungen aufweisen, ist eine besonders einfache, rationelle Herstellung möglich.

Aus FR-A-2 200 420 ist es zwar auch bekannt, jedes Rohr mit Halteteilen zu versehen die aus dem Rohrinnern mit einem Verbindungskörper verschraubbar sind. Die im wesentlichen würfelförmigen Verbindungskörper liegen jedoch ausserhalb der Rohre, derart, dass jede Verbindungsstelle zwischen zwei aneinanderstossenden Rohren zwei Fugen aufweist.

Vorzugsweise sind gemäss Anspruch 2 an den Rohren Fenster vorgesehen, welche die Montage jedes Rohres bzw. Rohrendes aus dem Inneren des Rohres erlauben. Es ist ferner besonders vorteilhaft, Füllungen gemäss Anspruch 5 vorzusehen, welche eine besonders wirksame Versteifung des Rohrgestells in der gewollten Form bewirken und die erwähnten Fenster abdecken können. Solche Füllungen haben ausserdem den Vorteil, dass sie mit ihren Kantenflächen satt und fugenlos an die Rohre anliegen, was wiederum einer problemlosen Reinigung und besonderen Hygiene zugutekommt. Eine entsprechend einfache und wirksame Lösung wäre nicht möglich, wenn in den Knotenpunkten des Gestells statt der direkt aneinandergefügten Rohren Verbindungselemente grösserer Abmessungen liegen.

Die Füllungen oder Wandelemente können vorzugsweise so ausgebildet sein, dass sie in das montierte Rohrgestell eingeschnappt, also ebenfalls sehr einfach, ohne besondere Verbindugnsmittel, montiert werden können.

Damit sind insgesamt besonders günstige Voraussetzungen für die Selbstmontage des Möbels gegeben.

Die Erfindung wird nun anhand zweier in der Zeichnung dargestellter Ausführungsbeispiele näher erläutert.
- Fig. 1: zeigt einen Knotenpunkt des ersten Möbelgestells teils in Ansicht, teils im Schnitt,
- Fig. 2: zeigt eine Draufsicht auf einen Knotenpunkt,
- Fig. 3: zeigt einen Teilschnitt durch ein Rohr des Gestells mit einem Montagewerkzeug,
- Fig. 4: zeigt verschiedene Ausführungsformen der Anordnung von Füllungen oder Wandteilen des Möbels,
- Fig. 5: zeigt einen Schnitt durch die zweite Ausführungsform,
- Fig. 6 u. 7: zeigen eine bevorzugte Ausführung einer Füllung und
- Fig. 8: zeigt die Gestaltung der Anschlussflächen an den Enden der Rohre.

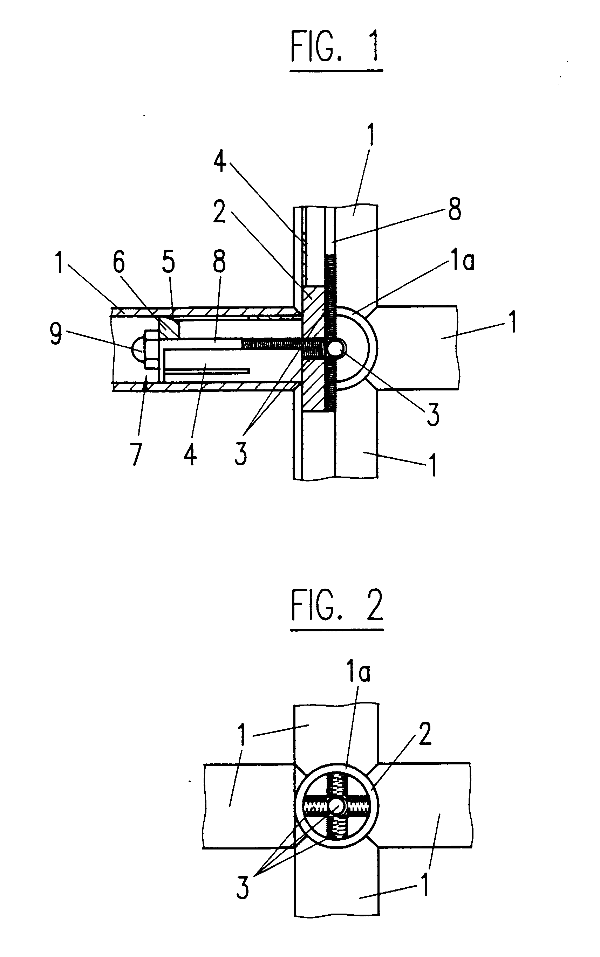

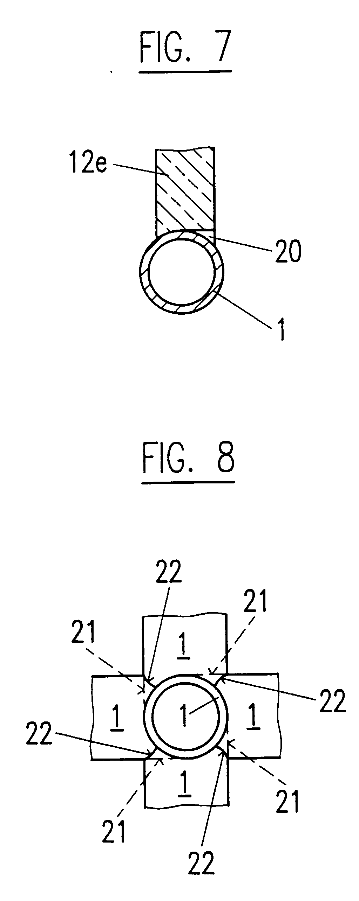

Figur 1 zeigt einen Knotenpunkt oder eine Verbindungsstelle des Rohrgestells eines Möbels. In diesem Knotenpunkt sind vier in der Zeichnungsebene liegende Rohre 1 mit einem rechtwinklig dazustehenden Rohr 1a verbunden. Es ist hier angenommen, es handle sich um relativ dünnwandige Rohre aus Leichtmetall oder Stahl, deren Festigkeit nicht genügt, um Schraubverbindungen direkt mit den Rohrwandungen genügender Festigkeit herzustellen. In zwei fluchtende Rohre ist daher ein massiver Verbindungskörper 2, beispielsweise aus Messing, eingesetzt, welcher drei durchgehende, rechtwinklig zueinander stehende Gewindebohrungen 3 aufweist. In Figur 1 ist die Verbindung eines der Rohre mit den übrigen Rohren bzw. dem Verbindungskörper 2 dargestellt. In das Ende jedes Rohres 1, mit Ausnahme des unteren, ist eine Spannhülse 4 eingesetzt, die am einen Ende geschlitzt ist und somit elastisch spreizbare Lappen aufweist. Sie ist an diesem Ende auch mit einer konischen Stirnfläche 5 versehen, gegen welche eine Spreizscheibe 6 mit entsprechendem Konus anliegt. Diese Spreizscheibe 6 wird vom Kopf 7 einer Schraube 8 gegen die Spannhülse 4 angepresst, welche durch ein Loch des unteren Rohrs 1 mit der einen Gewindebohrung des Verbindungskörpers 2 verschraubt ist. Das andere Ende der Spannhülse 4 ist mit Ausschnitten versehen, welche gegen die Aussenflächen der quer dazu stehenden Rohre 1 anliegen und damit eine eindeutige Lage der Spannhülse und des mit derselben befestigten Rohres ergeben und ausserdem die Spannhülse gegen Verdrehung sichern. Diese Ausschnitte der Spannhülse 4 sind zwar in Fig. 1 nicht ersichtlich, sie entsprechen aber im wesentlichen den Ausschnitten der Rohre 1 deren Stirnflächen im Knotenpunkt praktisch fugenlos aneinanderliegen. Die genaue Gestaltung der Stirnflächen der Rohre 1 ist in Fig. 8 dargestellt. Wie Fig. 1 zeigt, ist der senkrechte Aufbau der Rohre ähnlich, wobei das untere Rohr bis auf das Niveau der oberen Mantellinie der horizontalen Rohre reicht und ohne Spannhülse 4 genügend gehalten ist. Der Verbindungskörper 2 erstreckt sich in das obere Rohr 1 hinein und führt dasselbe.

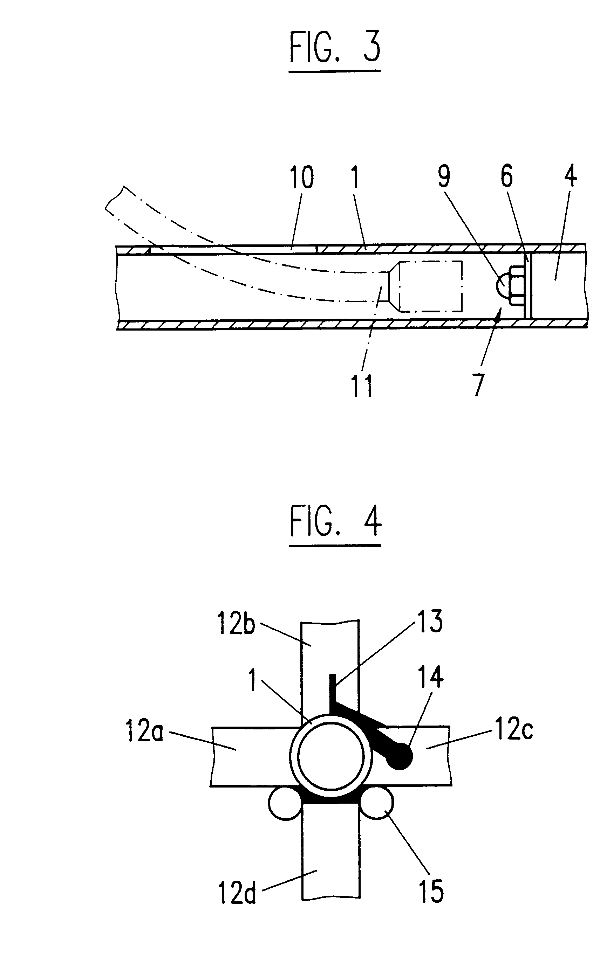

Zur Montage eines Knotenpunktes des Möbelgestells werden zuerst die erforderlichen Spannhülsen 4 mit ihren Schrauben 8 mit dem jeweiligen Verbindungskörper 2 lose verschraubt, d. h. ohne die Schraube voll anzuziehen, und dann werden die Rohre 1 auf die noch nicht gespreizten Spannhülsen 4 aufgeschoben. Sodann werden die Schrauben 8 von der jeweils noch offenen Seite der Rohre 1 her mittels eines langen flexiblen Schraubenschlüssels festgezogen. Zu diesem Zwecke sind die Schraubenköpfe 7 mit einem Fortsatz 9 versehen, welcher den Schraubenschlüssel zentriert und somit dessen Kuppeln mit dem Schraubenkopf erleichtert. Die Schrauben 8 können am inneren und äusseren Ende eine sechskantige Bohrung oder einen sechskantigen Fortsatz zum Festziehen derselben durch die Gewindebohrung 3 von der anderen Seite aufweisen. Spätestens bei der Montage der letzten Rohre wird es aber nicht mehr möglich sein, durch ein gegenüberliegendes offenes Ende eines Rohres 1 oder eine Gewindebohrung festzuziehen. Es müssen also gewisse Rohre gemäss Fig. 3 mit einem schlitzförmigen Fenster 10 ausgeführt werden, durch welches der flexible Schraubenschlüssel 11 eingeführt werden kann, um mindestens eine der Schrauben festzuziehen und damit die Spannhülse 4 zu spreizen und das aufgeschobene Rohr 1 zu befestigen. Solche Fenster werden vorzugsweise an einer später nicht sichtbaren Innenseite oder Unterseite des Möbels angeordnet und nach beendigter Montage mit einem einsteckbaren Deckel oder mittels einer unten näher beschriebenen Füllung dicht verschlossen. Es können aber auch alle Rohre mit Fenstern 10 versehen sein, durch welche die Schrauben 8 festgezogen bzw. zur Demontage gelöst werden können.

Es entsteht damit ein Rohrgestell, an welchem äusserlich nur die Rohre 1 selbst sichtbar sind, und da diese Rohre praktisch fugenlos miteinander verbunden sind, verbleiben keine Vertiefungen oder Hohlräume, in welchen Verunreinigungen sich festsetzen können und die schwer zu reinigen sind. Wie erwähnt ist daher das Möbel speziell geeignet für Anwendungen, bei welchen es auf gute Reinigungsmöglichkeit und Hygiene ankommt. Der Verbindungskörper 2 gemäss Fig. 1 ist gedacht für Knotenpunkte an welchen sechs Rohre aneinanderstossen. Würde beispielsweise beim Knotenpunkt gemäss Fig. 1 das obere Rohr 1 wegfallen, würde ein Verbindungskörper 2 verwendet, bei welchem der obere Teil der Gewindebohrung 3 wegfallen und somit der Verbindungskörper dort eine glatte Aussenfläche ohne Vertiefung oder Bohrung aufweisen würde. Es sind also mindestens zwei verschiedene Arten von Verbindungskörpern vorhanden, welche für verschiedene Zwecke einqesetzt werden können. Es wäre aber auch möglich, mit einer Art von Verbindungskörpern auszukommen und jeweils von aussen zugängliche bzw. sichtbare Gewindebohrungen mittels einer geeigneten Kappe abzudecken.

Figur 4 zeigt verschiedene Varianten der Ausstattung des Möbels mit Füllungen oder Wandelementen. Im einfachsten Falle sind Wandelemente 12a wie in Fig. 4 links eines dargestellt ist, vorgesehen, welche an den Kanten zylindrisch gekehlt sind und somit fugenlos an ein Rohr 1 anliegen können. Bei der Montage des Möbels müssen diese Elemente jeweils eingeführt werden, bevor ein letztes Rohr an der vierten Seite der Füllung in das Rohrgestell eingebaut wird. Es ist aber auch möglich, Füllungen 12b vorzusehen, von welchen in Fig. 4 oben eine dargestellt ist. Diese Füllung ist an mindestens einer Kante mit einem Schlitz versehen, in welchen eine Lippendichtung 13 eingesetzt ist, die an eine benachbarte Füllung 12c anliegt. Dank der Elastizität der Dichtung 13 kann eine solche Füllung 12b nach Fertigstellung des Rohrgestells in das Rohrgestell eingeschnappt werden. Fig. 4 zeigt ebenfalls, dass in das Wandelement 12c ausserdem oder alternativ in eine hinterschnittene Nut eine Federzunge 14 eingesetzt sein kann, welche ebenfalls gestattet, die Füllung 12c nach Fertigstellung des Rohrgestelles in dasselbe einzuschnappen. Fig. 4 zeigt schliesslich eine Füllung 12d, die an einem oder mehreren Kanten mit einer Dichtung 15 versehen ist. Auch diese Füllung kann mit der Dichtung 15 versehen nachträglich in ein fertiggestelltes Rohrgestell eingeschnappt werden. In allen Fällen entsteht ein Möbel mit Rohrgestell und Füllungen, bei dem alle Teile praktisch fugenlos und dicht miteinander verbunden sind, derart dass keine Oeffnungen, Ritzen oder Hohlräume verbleiben, in welchen sich Verunreinigungen ansammeln können und welche schwer zu reinigen sind. Die Dichtungen, insbesondere die Dichtung 15 kann dabei auch dazu dienen, einen dichten Abschluss von Schwenktüren des Möbels sicherzustellen.

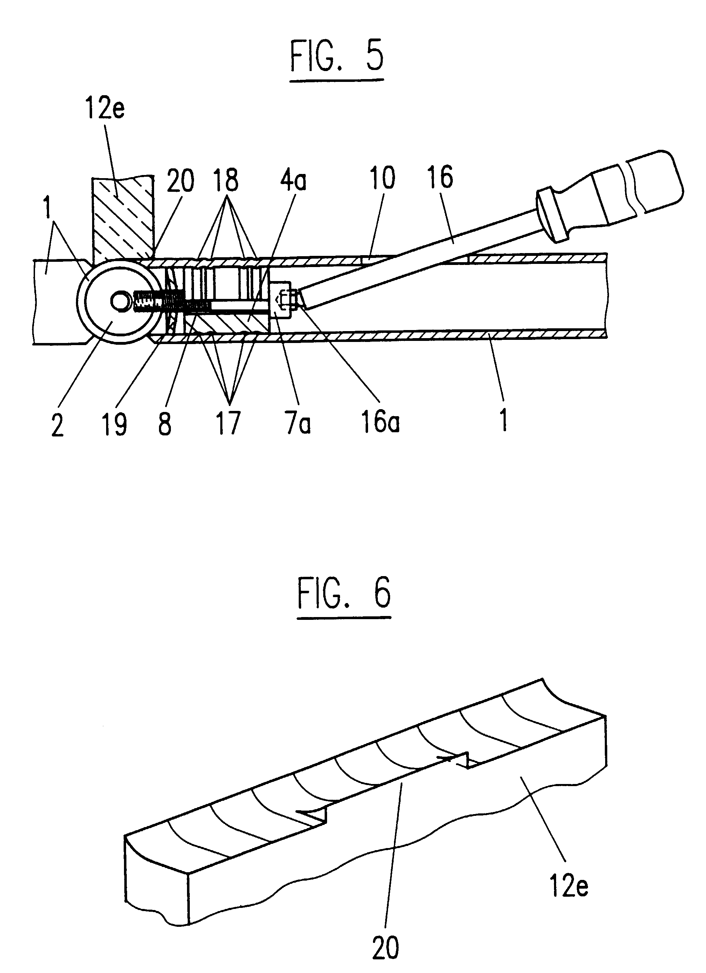

Figur 5 zeigt eine Ausführungsvariante, bei welcher anstelle der Spannhülsen 4 starre Zylinder 4a vorgesehen sind. Diese Zylinder 4a sind mit Rillen 17 versehen, in welche die Wandung des Rohres 1 an den Stellen 18, vorzugsweise an der im Möbel nicht sichtbaren Unterseite oder Innenseite eingepresst ist, um den Zylinder 4a im Rohr 1 zu sichern. Die Zylinder 4a sind auch mit Axialbohrungen versehen, durch welche eine Schraube 7a durchgeführt werden kann, um das Rohr 1 mit anderen Rohren bzw. einem Verbindungskörper 2 zu verbinden. Als weitere Variante zeigt Figur 5 eine Innensechskantschraube 7a, die mit einem starren Schlüssel 16 mit Aussensechskant 16a angezogen bzw. gelöst werden kann. Es genügt in diesem Falle ein kleineres Fenster 10 als im Falle von Figur 3. Verbindungskörper 2 könnten ähnlich dem Zylinder 4a mit Rillen 17 versehen und mittels Einpressungen des umgebenden Rohres gesichert werden. Solche Körper mit Axialgewinde könnten z. B. in der Nähe der unteren Enden der senkrechten Rohe eines Möbels angebracht werden und zur Aufnahme von Schrauben von Stellfüssen dienen. Die Schraube 8 ist mittels einer Tellerfeder 19, die mit elastischen Lappen in das Gewinde greift, gegen Verlieren im Zylinder 4a gesichert.

Fig. 5 zeigt auch einen Wandteil 12e, der mit einer gekehlten Fläche an eines der Rohre anliegt. Wie auch die Fig. 6 und 7 zeigen, sind die Randflächen der Füllung 12e so ausgebildet, dass im Mittelteil eine zylindrische Vollkehle 20 vorgesehen ist, während ausserhalb dieses Mittelteils die eine Begrenzung oder Flanke der Hohlkehle entfernt ist. Damit wird es möglich, die Füllung nach Fertigstellung des Rohrgestells in dasselbe einzuschnappen, indem die Rohre in den Mittelpartien etwas elastisch gespreizt werden, um die Füllung einzuschnappen.

Es sind damit insgesamt besonders günstige Voraussetzungen für eine leichte Montage des Möbels geschaffen. Ein Bausatz zur Selbstmontage kann die für ein Möbel notwendigen Rohre mit eingesetzten Zylindern 4a und unverlierbaren Schrauben 8 sowie den Schlüssel 16 und die nötigen einschnappbaren Füllungen aufweisen. Es sind daher weder weitere Montageteile noch -Werkzeuge erforderlich.

Fig. 8 zeigt die Ausführung der Anschlussflächen der Rohre, welche z. B. mittels einer Laser-Schneidmaschine hergestellt werden können. Wie Fig. 8 zeigt, sind die Enden aller vier Rohre an einer Verbindungsstelle genau gleich gestaltet, nämlich mit einer Nase 21, die in das benachbarte Rohr eingreift, welches eine entsprechende Ausnehmung 22 aufweist. Damit wird eine besonders rationelle Herstellung ermöglicht.

## Patentansprüche

1. Möbel mit einem Rohrgestell, wobei an den Verbindungsstellen des Rohrgestells Rohre (1) mittels in deren Enden befestigten Halteteilen (4, 4a) mit ihren Stirnflächen gegen die Mantelfläche eines quer dazu stehenden Rohres gespannt sind, indem je eine Schraube (8) der Halteteile (4, 4a) die axial im Rohr liegt, mit einer radialen Gewindebohrung (3) eines Verbindungskörpers (21) im genannten quer dazu stehenden Rohr verschraubt ist, dadurch gekennzeichnet, dass Rohre (1 ) von kreisringförmigem Querschnitt mit gleichartigen Anschlussfräsungen mit je einer Nase (21), die in eine Ausnehmung (22) eines benachbarten Rohres (1) eingreift, direkt fugenlos aneinanderstossen und je an einem der genannten quer dazu liegenden Rohre (1) anliegen, und dass Rohre (1) mit Halteteilen (4, 4a) versehen sind, die aus dem Rohrinnern mit einem Verbindungskorper (2) in einem quer dazu stehenden, anstossenden Rohr verschraubt sind.

2. Möbel nach Anspruch 1, dadurch gekennzeichnet, dass die Rohre (1) mit Fenstern (10) zum Einführen eines Spannwerkzeugs (11) versehen sind.

3. Möbel nach Anspruch 2, dadurch gekennzeichnet, dass die Fenster (10) durch Wandelemente (12) verschlossen sind.

4. Möbel nach einem der Ansprüche 1 bis 3, dadurch gekennzeichnet, dass die Verbindungskörper (2) zwei rechtwinklig zueinander und zur Achse des Rohres (1), in das sie eingesetzt sind, stehende oder zusätzlich eine in der Rohrachse liegende Gewindebohrung aufweisen.

5. Möbel nach einem der Ansprüche 1 bis 6, mit Füllungen oder Wandelementen, dadurch gekennzeichnet, dass die Wandelemente (12a - 12d) an den Kanten Hohlkehlen (20) aufweisen, in welche die Rohre (1) eingreifen.

6. Möbel nach Anspruch 5, dadurch gekennzeichnet, dass volle Hohlkehlen (20) nur in einem Mittelbereich der Seiten der Wandelemente (12a - 12d) vorgesehen sind, während in den übrigen Bereichen die eine Begrenzung der Hohlkehle entfernt ist.

7. Möbel nach Anspruch 5 oder 6, dadurch gekennzeichnet, dass Füllungen (12b - 12d) an ihren Kanten mit elastischen Dichtungen (13, 15) oder Federleisten (14) versehen sind.

8. Möbel nach einem der Ansprüche 1 bis 7, dadurch gekennzeichnet, dass als Halteteile in die Rohre (1) eingesetzte starre Zylinder (4a) mit Rillen (17) vorgesehen sind, in welche die Rohrwandung stellenweise zur Sicherung des Zylinders (4a) im Rohr eingepresst ist.

9. Möbel nach einem der Ansprüche 1 bis 8, dadurch gekennzeichnet, dass im Halteteil (4, 4a) eine Schraube (8) verliersicher gehalten ist.

## Claims

1. Furniture with a tube framework, the front surfaces of tubes (1) being tensioned at the junctures of the tube framework towards the surface of a transversally extending tube by means of retaining elements (4, 4a) which are fastened in the ends of said tubes and by means of a respective screw (8) of the retaining elements (4, 4a) which is axially disposed in the tube and engages in a radial threaded bore (3) of a connecting body (21) in said transversally extending tube, characterised in that tubes (1) which have a circular cross-section and are provided with identical connecting millings each comprising a nose (21) which engages in a recess (22) of an adjacent tube (1) are connected to each other directly without gaps and contact one of said transversally extending tubes (1) each, and in that tubes (1) are provided with retaining elements (4, 4a) which are screwed from inside the tube to a connecting body (2) disposed in a transversally extending, contacting tube.

2. Furniture according to claim 1, characterised in that the tubes (1) are provided with windows (10) allowing to introduce a fastening tool (11).

3. Furniture according to claim 2, characterised in that the the windows (10) are covered by panels (12).

4. Furniture according to any one of claims 1 to 3, characterised in that the connecting bodies (2) comprise two threaded bores extending in perpendicular to each other and to the axis of the tube (1) in which they are inserted, or an additional bore extending in the axis of the tube.

5. Furniture according to any one of claims 1 to 6, comprising panels or wall elements, characterised in that the wall elements (12a - 12d) are provided at their edges with wooden flutings (20) in which the tubes (1) engage.

6. Furniture according to claim 5, characterised in that complete wooden flutings (20) are only provided in a central area of the sides of the wall elements (12a 12d), while one of the borders of the wooden fluting is removed in the other areas.

7. Furniture according to claim 5 or 6, characterised in that panels (12b - 12d) are provided at their edges with resilient sealing joints (13, 15) or with resilient joint tongues (14).

8. Furniture according to any one of claims 1 to 7, characterised in that rigid cylinders (4a) with grooves (17) which are inserted in the tubes (1) are provided as retaining elements, the tube wall being locally pressed in in order to secure the cylinder (4a).

9. Furniture according to any one of claims 1 to 8, characterised in that a screw (8) is unlosably maintained in the retaining element (4, 4a).

## Revendications

1. Meuble avec un cadre constitué de tubes, dans lequel, aux joints du cadre de tubes, des tubes (1) sont serrés par leurs faces frontales contre la surface latérale d'un tube perpendiculaire au moyen d'éléments de retenue (4, 4a) fixés dans leurs extrémités et par l'intermédiaire d'une vis (8) correspondante des éléments de retenue (4, 4a) qui est disposée axialement dans le tube et qui est vissée dans un alésage taraudé (3) d'un corps de connexion (21) dans ledit tube perpendiculaire, caractérisé en ce que des tubes (1) de coupe transversale circulaire, qui présentent des fraisages de raccordement identiques comprenant chaque fois un ergot (21) qui s'engage dans un évidement (22) d'un tube adjacent (1), sont directement raccordés sans joints et contactent l'un desdits tubes perpendiculaires (1) chacun, et que des tubes (1) sont pourvus d'éléments de retenue (4, 4a) qui sont vissés depuis l'intérieur du tube à un corps de connexion (2) disposé dans un tube adjacent et perpendiculaire à ceux-ci.

2. Meuble selon la revendication 1, caractérisé en ce que les tubes (1) présentent des fenêtres (10) permettant l'introduction d'un outil de serrage (11).

3. Meuble selon la revendication 2, caractérisé en ce que les fenêtres (10) sont couvertes par des éléments de paroi (12).

4. Meuble selon l'une quelconque des revendications 1 à 3, caractérisé en ce que les corps de connexion (2) présentent deux alésages taraudés perpendiculaires l'un à l'autre et à l'axe du tube (1) dans lequel ils sont introduits, ou un alésage fileté supplémentaire conforme à l'axe du tube.

5. Meuble selon l'une quelconque des revendications 1 à 6, comprenant des panneaux ou éléments de paroi, caractérisé en ce que les éléments de paroi (12a - 12d) présentent aux bords des gorges (20) dans lesquelles s'engagent les tubes (1).

6. Meuble selon la revendication 5, caractérisé en ce que des gorges entières (20) ne sont prévues que dans une zone centrale des côtés des éléments de paroi (12a - 12d), alors que l'une des bordures des gorges est ôtée dans les autres zones.

7. Meuble selon la revendication 5 ou 6, caractérisé en ce que des panneaux (12b - 12d) présentent aux bords des joints d'étanchéité (13, 15) élastiques ou des languettes élastiques (14).

8. Meuble selon l'une quelconque des revendications 1 à 7, caractérisé en ce que des cylindres rigides (4a) cannelés (17) insérés dans les tubes (1) sont prévus en tant qu'éléments de retenue, la paroi du tube étant localement enfoncée dans le cylindre (4a) pour bloquer ce dernier dans le tube.

9. Meuble selon l'une quelconque des revendications 1 à 8, caractérisé en ce qu'une vis (8) est maintenue de façon imperdable dans l'élément de retenue (4, 4a).
